(19) Europäisches Patentamt
European Patent Office
Office européen des brevets

(11) **EP 4 749 169 A1**

(12) **DEMANDE DE BREVET EUROPEEN**

(43) Date de publication:
**27.05.2026 Bulletin 2026/22**

(21) Numéro de dépôt: **25217590.6**

(22) Date de dépôt: **21.11.2025**

(51) Classification Internationale des Brevets (IPC):
**F16L 29/04** (2006.01)    **F16L 37/34** (2006.01)

(52) Classification Coopérative des Brevets (CPC):
**F16L 37/34; F16L 29/04**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **22.11.2024 FR 2412842**

(71) Demandeur: **CRYOPAL**
**77600 Bussy Saint-Georges (FR)**

(72) Inventeur: **Lekhel, Manal**
**77200 TORCY (FR)**

(74) Mandataire: **Delaveau, Sophie**
**ARDAN**
**18 avenue de l'Opera**
**75001 Paris (FR)**

(54)    **DISPOSITIF DE COUPLAGE DE CONDUITE DE FLUIDE**

(57)    L'invention porte principalement sur un dispositif de couplage comprenant un raccord mâle (1) et un raccord femelle (1'), chaque raccord comprenant un clapet (7, 7') muni d'une tête de clapet (8, 8'). La première force de déclenchement $F_{DM}$ du déplacement de la première tête de clapet (8) du raccord mâle (1) est supérieure à la seconde force de déclenchement $F_{DF}$ du déplacement de la seconde tête de clapet (8') du raccord femelle (1') de sorte que la seconde tête de clapet (8') se déplace vers sa position dégagée avant la première tête de clapet (8).

La force exercée par les seconds moyens de rappel (9') sur la première tête de clapet (8) est supérieure à la première force de déclenchement $F_{DM}$ lorsque le dispositif de couplage est dans sa position de passage de fluide.

[Fig. 1]

Processed by Luminess, 75001 PARIS (FR)

EP 4 749 169 A1

## Description

## DOMAINE TECHNIQUE DE L'INVENTION

Le domaine technique de l'invention est celui des dispositifs de couplage de conduite de fluide, et plus particulièrement de fluide cryogénique.

## ARRIERE-PLAN TECHNOLOGIQUE DE L'INVENTION

Les dispositifs de couplage sont connus pour transférer des fluides, notamment des fluides cryogéniques, depuis un réservoir de stockage vers un réservoir d'utilisation mobile.

Pour ce faire, le dispositif de couplage présente un premier raccord mâle et un second raccord femelle qui sont des vannes à clapet dont les extrémités sont disposées en aboutement. Chaque vanne comporte un orifice de passage du fluide duquel dépasse un clapet en appui sur un ressort. En position de repos, le ressort maintient les clapets en prise dans les orifices de passage du fluide respectifs, le raccord étant ainsi en position fermée. Le couplage des raccords engendre un déplacement des ressorts et donc des clapets. Sous l'effet du couplage, le déplacement des clapets engendre la création d'un orifice de passage, assurant le transfert du fluide à travers le dispositif de couplage.

Le premier raccord mâle est solidaire du réservoir de stockage tandis que le second raccord femelle est solidaire du réservoir d'utilisation mobile à remplir.

Lors de la séquence d'ouverture du dispositif de conduite au cours de laquelle le dispositif dans son ensemble passe d'une position dans laquelle les deux raccords mâle et femelle sont fermés, à une position dans laquelle les deux raccords mâle et femelle sont ouverts, il existe un risque que le clapet du premier raccord mâle s'ouvre avant le clapet du second raccord femelle. Le fluide cryogénique s'échapperait alors dans l'espace entre les extrémités libres des premier et second raccords, et la gazéification du fluide engendrerait une surpression risquant d'endommager les raccords du dispositif de conduite.

Dans ce contexte, l'invention vise un dispositif de couplage de fluide qui pallie les inconvénients précités en proposant une conduite de raccord évitant toute fuite de fluide durant la séquence d'ouverture du dispositif de conduite.

## RESUME DE L'INVENTION

A cet effet, l'invention concerne un dispositif de couplage de conduite de fluide comprenant un premier raccord formant partie mâle et un second raccord coopérant formant partie femelle, le premier raccord formant partie mâle comportant :

- un premier corps longitudinal qui s'étend selon un axe principal depuis une première extrémité de jonction à une première conduite jusqu'à une première extrémité de couplage au second raccord coopérant du dispositif de couplage, laquelle première extrémité de couplage présente un premier orifice de passage du fluide en communication fluidique avec un premier canal d'écoulement ménagé dans le premier corps longitudinal et qui s'étend depuis la première extrémité de couplage jusqu'à la première extrémité de jonction à la première conduite,

- un premier clapet disposé dans le premier canal d'écoulement du premier corps longitudinal, dont l'axe principal s'étend selon l'axe principal dudit corps longitudinal du premier raccord, et qui comporte une première tête de clapet située au niveau du premier orifice de passage de la première extrémité de couplage du premier corps longitudinal et déplaçable longitudinalement dans le premier canal d'écoulement entre une position dégagée dans laquelle ledit orifice de passage est ouvert et une position fermée de prise étanche dans laquelle le premier orifice de passage est obturé par appui de contact étanche entre la première tête de clapet et un premier siège de tête de clapet ménagé dans le premier corps longitudinal et dans le prolongement interne du premier orifice de passage, une première extrémité libre d'obturation du premier clapet s'étendant dans le premier orifice de passage en faisant saillie de la première extrémité de couplage, lequel premier clapet comprend en outre des premiers moyens de rappel de la première tête de clapet vers sa position fermée de prise étanche,

le second raccord formant partie femelle comportant :

- un second corps longitudinal qui s'étend depuis une seconde extrémité de jonction à une seconde conduite jusqu'à une seconde extrémité de couplage qui entoure la première extrémité de couplage du premier raccord, laquelle seconde extrémité de couplage présente un second orifice de passage du fluide en communication fluidique avec un second canal d'écoulement ménagé dans le second corps longitudinal et qui s'étend depuis la seconde extrémité de couplage jusqu'à la seconde extrémité de jonction à la seconde conduite,

- un second clapet disposé dans le second canal d'écoulement du second corps longitudinal et comportant une seconde tête de clapet située au niveau du second orifice de passage de la seconde extrémité de couplage dudit corps longitudinal, et qui est déplaçable longitudinalement dans le second canal d'écoulement depuis une position dégagée dans laquelle le second orifice de passage est ouvert, vers une position de prise étanche dans laquelle le second orifice de passage est obturé par appui de contact étanche entre la seconde tête clapet et un second siège de tête de clapet ménagé dans le second corps longitudinal et dans le prolongement du second orifice de passage, une seconde extrémité libre d'obturation du second clapet s'étendant dans le second orifice de passage en faisant saillie de la seconde extrémité de couplage, lequel second clapet comprend en outre des seconds moyens de rappel de la seconde tête de clapet vers sa position fermée de prise étanche,

le dispositif de couplage étant actionnable entre une position d'obturation dans laquelle les têtes de clapet des clapets des premier et second raccords sont dans leur position de prise étanche et leurs extrémités libres d'obturation s'effleurent, et une position de passage de fluide depuis le premier raccord mâle vers le second raccord femelle dans laquelle les premiers moyens de rappel de la première tête de clapet du premier clapet exercent une force sur l'extrémité libre du second clapet et maintiennent la seconde tête de clapet dudit clapet dans sa position dégagée, et les seconds moyens de rappel de la seconde tête de clapet du second clapet exercent une force sur l'extrémité libre du premier clapet et maintiennent la première tête de clapet dudit clapet dans sa position dégagée,
laquelle première tête de clapet du premier clapet du premier raccord mâle est déplaçable depuis sa position de prise étanche vers sa position dégagée à l'encontre du premier moyen de rappel lorsque les efforts exercés sur l'extrémité libre dudit premier clapet est supérieure à une première force de déclenchement $F_{DM}$ dépendante des premiers moyens de rappel, laquelle seconde tête de clapet du second clapet du second raccord femelle est déplaçable depuis sa position de prise étanche vers sa position dégagée à l'encontre du second moyen de rappel lorsque les efforts exercés sur l'extrémité libre dudit second clapet est supérieure à une seconde force de déclenchement $F_{DF}$ dépendante des seconds moyens de rappel, laquelle première force de déclenchement $F_{DM}$ du déplacement de la première tête de clapet du premier clapet est supérieure à la seconde force de déclenchement $F_{DF}$ du déplacement de la seconde tête de clapet du second clapet, et laquelle force exercée par les seconds moyens de rappel sur la première tête de clapet du premier clapet est supérieure à la première force de déclenchement $F_{DM}$ lorsque le dispositif de couplage est dans sa position de passage de fluide, de sorte que la seconde tête de clapet du second clapet se déplace vers sa position dégagée avant la première tête de clapet du premier clapet lorsque le dispositif de couplage se déplace de sa position d'obturation vers sa position de passage de fluide depuis le premier raccord mâle vers le second raccord femelle.

L'invention peut également comporter les caractéristiques optionnelles suivantes considérées isolément ou selon toutes les combinaisons techniques possibles :

- Les extrémités de couplage des corps longitudinaux des premier et second raccords sont en appui de contact lorsque le dispositif de couplage est dans sa position de passage de fluide depuis le premier raccord mâle vers le second raccord femelle.
- Les premiers moyens de rappel sont formés d'un premier ressort présentant la première force de déclenchement $F_{DM}$ et une raideur $k_M$, et en ce que les seconds moyens de rappel sont formé d'un second ressort présentant la seconde force de déclenchement $F_{DF}$ et une raideur $k_F$.

La constante de raideur $k_M$ du premier ressort s'exprime selon la formule [Math 1] :

$$k_M = k_F \times \frac{F_2 - (F_{DF} + 10)}{k_F.b - (F_2 - F_{DF})}$$

avec F2 la force exercée contre les deux têtes de clapets des clapets des raccords mâle et femelle lorsque le dispositif de couplage est dans sa position de passage de fluide, et b la distance entre les extrémités de couplage des corps longitudinaux des premier et second raccords lorsque le dispositif de couplage est dans sa position d'obturation.

Un autre aspect de l'invention concerne un procédé de couplage d'un dispositif de couplage selon l'une quelconque des revendications précédentes, caractérisé en ce qu'il comprend les étapes successives suivantes :

- Le dispositif de couplage étant dans sa position d'obturation et les têtes de clapets des clapets du premier raccord mâle et du second raccord femelle dans leur position fermée de prise étanche, application d'un effort de rapprochement progressif des deux raccords mâle et femelle entre eux ;
- Déplacement progressif de la seconde tête de clapet du second clapet du second raccord femelle vers sa position dégagée dès que l'effort de rapprochement exercé sur la seconde extrémité libre dudit second clapet dépasse la valeur de la seconde force de déclenchement $F_{DF}$, la première tête de clapet du premier clapet du premier raccord mâle demeurant dans sa position fermée de prise étanche ;
- Déplacement progressif de la première tête de clapet du premier clapet vers sa position dégagée dès que l'effort de rapprochement exercé sur la première extrémité libre dudit premier clapet dépasse la première force de déclenchement $F_{DM}$, la seconde tête de clapet du second clapet étant dans sa position dégagée ;

- Arrivée de la première tête de clapet du premier clapet du premier raccord mâle dans sa position dégagée et du dispositif de couplage dans sa position de passage de fluide.

Le procédé de l'invention peut également comporter les caractéristiques optionnelles suivantes considérées isolément ou selon toutes les combinaisons techniques possibles :

- Le dispositif de couplage arrive dans sa position dégagée dès que les extrémités de couplage des corps longitudinaux des premier et second raccords entre en appui de contact.

L'invention et ses différentes applications seront mieux comprises à la lecture de la description qui suit et à l'examen des figures qui l'accompagnent.

## BREVE DESCRIPTION DES FIGURES

D'autres caractéristiques et avantages de l'invention ressortiront à la lecture de la description qui suit, en référence aux figures annexées, qui illustrent :

[Fig. 1] La figure 1 est une représentation schématique en coupe longitudinale du dispositif de couplage de conduite de fluide de l'invention lorsque les orifices de passage du fluide des premier et second raccords sont concomitamment obturés ;

[Fig. 2] La figure 2 est une représentation schématique en coupe longitudinale de la zone de connexion fluidique du dispositif de couplage de conduite de fluide de l'invention lorsque les orifices de passage du fluide des premier et second raccords sont concomitamment obturés ;

[Fig. 3] La figure 3 est une représentation schématique en coupe longitudinale de la zone de connexion fluidique du dispositif de couplage de conduite de fluide de l'invention lorsque l'orifice de passage du premier raccord est obturé et l'orifice de passage du second raccord est dégagé ;

[Fig. 4] La figure 4 est une représentation schématique en coupe longitudinale de la zone de connexion fluidique du dispositif de couplage de conduite de fluide de l'invention lorsque les orifices de passage du fluide des premier et second raccords sont concomitamment dégagés, le premier raccord étant à distance du second raccord ;

[Fig. 5] La figure 5 est une représentation schématique en coupe longitudinale de la zone de connexion fluidique du dispositif de couplage de conduite de fluide de l'invention lorsque les orifices de passage du fluide des premier et second raccords sont concomitamment dégagés, le premier raccord venant en appui de contact contre le second raccord ;

## DESCRIPTION DETAILLEE

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent un mode de réalisation de l'invention mais qu'il peut exister d'autres modes de réalisation qui répondent à la définition de l'invention.

La présente invention porte principalement sur un dispositif de couplage de conduite de fluide, et en particulier un dispositif de couplage présentant une séquence de couplage permettant de supprimer - ou tout du moins fortement limiter - le risque de fuite de fluide lors du transfert de fluide d'un récipient plein vers un récipient vide.

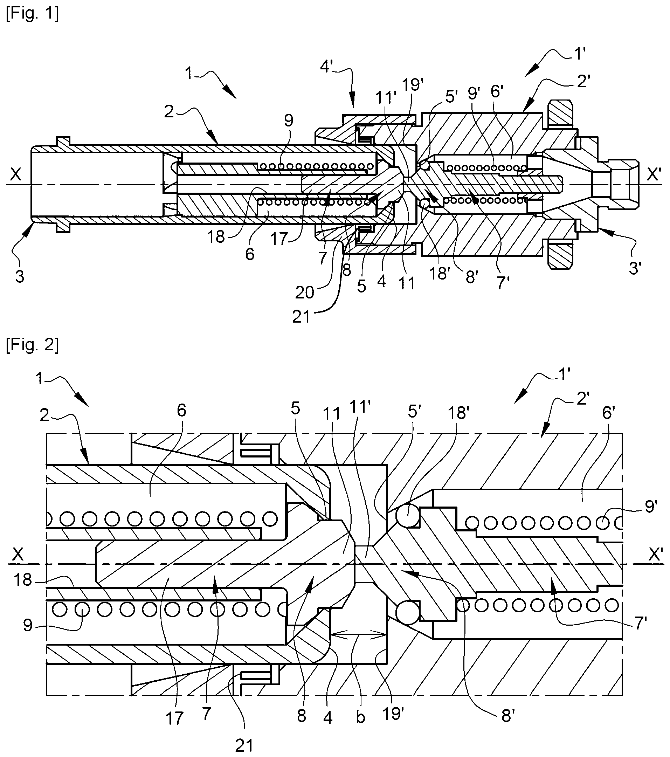

En référence à la figure 1, le dispositif de couplage comprend un premier raccord 1 formant partie mâle et un second raccord 1' formant partie femelle. Le premier raccord mâle 1 est relié à une première conduite 3 débouchant dans un réservoir d'un récipient plein de fluide - en particulier un fluide cryogénique - tandis que le second raccord femelle 1' est relié à une seconde conduite 3' débouchant dans un réservoir d'un récipient vide, prévu pour recueillir le fluide cryogénique transféré depuis le réservoir plein.

En référence à la figure 1, le raccord mâle 1 comporte un premier corps longitudinal 2 qui s'étend depuis une première extrémité de jonction à la première conduite 3 reliée au récipient plein (le récipient n'est pas représenté) jusqu'à une première extrémité de couplage 4 au second raccord femelle 1' coopérant du dispositif de couplage, laquelle extrémité de couplage 4 présente un premier orifice de passage du fluide 5 en communication fluidique avec un premier canal d'écoulement 6 ménagé dans le premier corps longitudinal 2 et qui s'étend à l'intérieur dudit corps longitudinal 2 depuis l'extrémité de couplage 4 jusqu'à la première extrémité de jonction à la conduite 3.

Le raccord mâle 1 comporte en outre un premier clapet 7 qui est disposé dans le premier canal d'écoulement 6 du premier corps longitudinal 2 du côté de la première extrémité de couplage 4. L'axe principal XX' du clapet 7 s'étend selon l'axe principal XX' du corps longitudinal 2. Le clapet 7 comporte une première tête de clapet 8 qui est située au niveau de l'orifice de passage 5 de l'extrémité de couplage 4 du corps longitudinal 2. La tête de clapet 8 s'étend longitudinalement entre une première extrémité libre 11 et une base de jonction 15 avec une tige longitudinale 17, laquelle tige 17 s'étend dans un guide tubulaire 18 du raccord 1 formant moyen de guidage longitudinal de la tige 17 dans le raccord mâle 1.

La tête de clapet 8 est déplaçable longitudinalement dans le raccord mâle 1 et plus particulièrement dans le canal d'écoulement 6 vers sa position d'obturation de l'orifice de passage 5, par l'application d'un effort longitudinal sur ladite tête de clapet 8 par des premiers moyens de rappel 9, ici un ressort hélicoïdal 9 entourant le guide tubulaire 18 et s'étendant longitudinalement jusqu'à la base de jonction 15 de la tête de clapet 8. Ce ressort 9 est caractérisé par une constante de raideur $k_M$.

Lorsqu'aucune force extérieure n'est appliquée sur la tête de clapet 8, le ressort 9 comprimé exerce une force de rappel contre la base 15 de la tête de clapet 8 en entraînant la tête de clapet 8 dans l'orifice de passage 5 en position de prise étanche, dans laquelle l'orifice de passage 5 est obturé par appui de contact étanche entre la tête de clapet 8 et un siège de tête de clapet tronconique 10 ménagé dans le corps longitudinal 2 et dans le prolongement interne de l'orifice de passage 5. Dans cette position, l'extrémité libre 11 de la tête de clapet 8 s'étend dans l'orifice de passage 5 en faisant saillie de l'extrémité de couplage 4 vers le raccord femelle 1'.

Le clapet 8 est également déplaçable longitudinalement dans le raccord 1, et plus particulièrement dans le canal d'écoulement 6, vers une position dégagée par l'action d'une force longitudinale exercée depuis l'extérieur du raccord 1 sur l'extrémité libre 11 de la tête de clapet 8 qui entraîne le ressort 9 en compression et l'ouverture de l'orifice de passage de fluide 5. En particulier, une force minimale dite force de déclenchement $F_{DM}$ doit être appliquée sur l'extrémité libre 11 de la tête de clapet 8 du clapet 7 du premier raccord mâle 1 afin d'enclencher le déplacement de la tête de clapet 8 depuis sa position de prise étanche vers sa position dégagée.

Le second raccord femelle 1' du dispositif de couplage de conduite de fluide comporte un second corps longitudinal 2' qui s'étend depuis une seconde extrémité de jonction à la seconde conduite 3' reliée au récipient vide destiné à recueillir le fluide contenu dans le récipient plein (le récipient vide n'est pas illustré) jusqu'à une seconde extrémité de couplage 4' qui entoure la première extrémité de couplage 4 du raccord mâle 1 en présentant un évidement de logement de ladite première extrémité de couplage 4, lequel évidement comporte un fond 19' en regard de la première extrémité de couplage 4 du raccord mâle 1. Comme pour le raccord mâle 1, la seconde extrémité de couplage 4' présente un second orifice de passage du liquide 5' en communication fluidique avec un second canal d'écoulement 6' ménagé dans le second corps longitudinal 2' et qui s'étend depuis la seconde extrémité de couplage 4' jusqu'à la seconde extrémité de jonction à la seconde conduite 3'.

Le raccord femelle 1' comporte un second clapet 7' qui est disposé dans le canal d'écoulement 6' du corps longitudinal 2' et qui comporte une seconde tête de clapet 8' située au niveau de l'orifice de passage 5' de l'extrémité de couplage 4' du corps longitudinal 2', et qui est déplaçable longitudinalement dans le canal d'écoulement 6' entre une position dégagée dans laquelle l'orifice de passage 5' est ouvert, et une position fermée de prise étanche dans laquelle l'orifice de passage 5' est obturé par appui de contact étanche entre la seconde tête clapet 8' et le siège de tête de clapet tronconique 10' via un joint d'étanchéité 18'.

Comme pour le premier raccord mâle 1, la tête de clapet 8' du raccord femelle 1' est déplaçable longitudinalement dans le raccord 1', et plus particulièrement dans le canal d'écoulement 6', vers sa position d'obturation de l'orifice de passage 5', par l'application d'un effort longitudinal sur ladite tête clapet 8' par des seconds moyens de rappel 9', ici un ressort hélicoïdal entourant la tige du clapet 7' et s'étendant longitudinalement jusqu'à la tête du clapet 8'. Ce ressort 9' est caractérisé par une constante de raideur $k_F$.

Lorsqu'aucune force extérieure n'est appliquée sur la tête du clapet 8', le ressort 9' comprimé exerce une force de rappel contre la base 15' du clapet 8' en entraînant la tête de clapet 8' dans l'orifice de passage 5' en position de prise étanche dans laquelle l'orifice de passage 5' est obturé. Dans cette position, l'extrémité libre 11' de la tête de clapet 8' s'étend dans l'orifice de passage 5' en faisant saillie de l'extrémité de couplage 4' vers le raccord mâle 1.

La tête de clapet 8' est également déplaçable longitudinalement dans le raccord femelle 1', et plus particulièrement dans le canal d'écoulement 6', vers une position dégagée par l'action d'une force exercée depuis l'extérieur du raccord femelle 1' sur l'extrémité libre 11' de la tête de clapet 8' qui entraîne le ressort 9' en compression et l'ouverture de l'orifice de passage de fluide 5'. En particulier, une force minimale dite force de déclenchement $F_{DF}$ doit être appliquée sur l'extrémité libre 11' de la tête de clapet 8' du clapet 7' du second raccord femelle 1' afin d'enclencher le déplacement de la tête de clapet 8' depuis sa position de prise étanche vers sa position dégagée.

En référence aux figures 1 et 2, le dispositif de couplage comprend en outre un joint circonférentiel en forme de collerette 21 inséré dans un espace ménagé au niveau de l'extrémité de couplage 4' du raccord femelle 1'. Lorsque le raccord mâle 1 est couplé dans le raccord femelle 1', le joint collerette 21 assure une fonction d'étanchéité empêchant toute fuite de liquide au niveau de la jonction de couplage entre les deux raccords 1, 1'. Par ailleurs, ce joint collerette 21 est maintenu en place grâce à une bague de verrouillage 20 qui entoure les extrémités de couplage respectives 4, 4' du premier raccord mâle 1 et du second raccord femelle 1', lorsque les deux raccords 1, 1' sont accouplés.

Le dispositif de couplage est actionnable entre une position d'obturation empêchant la circulation de fluide entre les deux récipients, et une position de passage de fluide entre les deux récipients.

Dans la position d'obturation (figure 2) du dispositif de couplage, la tête de clapet 8, 8' des clapets 7, 7' des premier et second raccords 1, 1' sont dans leur position de prise étanche. En outre, l'extrémité libre 11 de la tête de clapet 8 du premier clapet 7 du premier raccord mâle 1 effleure l'extrémité libre 11' de la tête de clapet 8' du second clapet 7' du second raccord femelle 1'. En d'autres termes, les extrémités libres 11, 11' des deux têtes de clapets 8, 8' sont au contact sans qu'aucune force ne soit exercée par le premier ressort 9 sur la tête de clapet 8' du second clapet 7' du second raccord femelle 1', ni par le second ressort 9' sur la tête de clapet 8 du premier clapet 7 du premier raccord mâle 1. En outre, dans cette position du dispositif de couplage, la distance séparant l'extrémité de couplage 4 du corps longitudinal 2 du premier raccord mâle 1 du fond 19' de l'évidement de logement de l'extrémité de couplage 4' du raccord femelle 1' est maximale, et égale à une valeur b (figure 2).

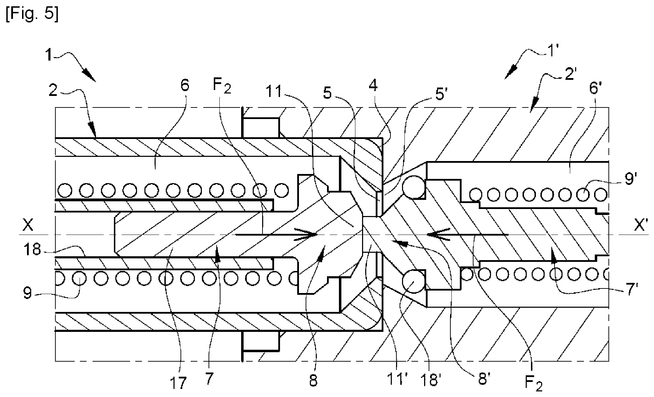

Dans la position de passage de fluide depuis le premier raccord mâle 1 vers le second raccord femelle 1' (figure 5), le premier ressort 9 de la tête de clapet 8 du premier clapet 7 du premier raccord mâle 1 exerce une première force sur l'extrémité libre 11' de la tête de clapet 8' du second clapet 7' du raccord femelle 1' et maintient la tête de clapet 8' dudit second clapet 7' du second raccord femelle 1' dans sa position dégagée. Concomitamment, le second ressort 9' de la tête de clapet 8' du second clapet 7' du second raccord femelle 1' exerce une seconde force sur l'extrémité libre 11 de la tête de clapet 8 du premier clapet 7 du premier raccord mâle 1 et maintiennent la tête de clapet 8 dudit clapet 7 du premier raccord mâle 1 dans sa position dégagée.

Ainsi, la tête de clapet 8 du premier clapet 7 du premier raccord mâle 1 est déplaçable depuis sa position de prise étanche vers sa position dégagée à l'encontre du premier ressort 9 lorsque les efforts exercés sur l'extrémité libre 11 dudit premier clapet 7 sont supérieurs à la première force de déclenchement $F_{DM}$ dépendante du premier ressort 9. De la même manière, la tête de clapet 8' du second clapet 7' du second raccord femelle 1' est déplaçable depuis sa position de prise étanche vers sa position dégagée à l'encontre du second ressort 9' lorsque les efforts exercés sur l'extrémité libre 11' dudit second clapet 7' est supérieure à la seconde force de déclenchement $F_{DF}$ dépendante du second ressort 9'.

Selon l'invention, lorsque le dispositif de couplage est dans sa position de passage de fluide, la force exercée par le second ressort 9' sur la tête de clapet 8 du premier clapet 7 du premier raccord mâle 1 est supérieure à la première force de déclenchement $F_{DM}$. Ceci garantit que, lorsque le dispositif de couplage est dans sa position de passage de fluide, les deux têtes de clapets 8, 8' des clapets 7, 7' des premier et second raccords respectifs 1, 1' sont bien dans leur position dégagée, assurant de fait le passage de fluide entre les deux raccords mâle 1 et femelle 1', du réservoir plein vers le réservoir vide.

A cet effet, la première force de déclenchement $F_{DM}$ du déplacement de la tête de clapet 8 du premier clapet 7 du premier raccord mâle 1 est supérieure à la seconde force de déclenchement $F_{DF}$ du déplacement de la tête de clapet 8' du second clapet 7' du second raccord femelle 1'.

Ainsi, dans le cadre du couplage des premier et second raccords 1, 1' du dispositif de couplage, la tête de clapet 8' du second clapet 7' du second raccord femelle 1' se déplace avant la tête de clapet 8 du premier clapet 7 du premier raccord mâle 1. Au moment du déplacement de la tête de clapet 8 du premier clapet 7 du premier raccord mâle 1, la distance entre l'extrémité de couplage 4 du corps longitudinal 2 du premier raccord 1 et le fond 19' de l'évidemment de logement de l'extrémité de couplage 4' du raccord femelle 1' sera inférieure à la valeur b, diminuant de fait le volume dudit évidement par rapport à son volume initial lorsque le dispositif de couplage est dans sa position d'obturation et les têtes de clapets respectives 8, 8' en contact sans appui. Il en résulte une fuite de liquide dans l'évidement limitée, et de fait un risque de surpression dans l'évidement diminué.

De manière particulièrement avantageuse, la tête de clapet 8 du premier clapet 7 du premier accord mâle 1 est dans sa position finale dégagée lorsque l'extrémité de couplage 4 du premier corps longitudinal 2 du premier raccord 1 est en appui de contact avec le fond 19' de l'évidemment de logement de l'extrémité de couplage 4' du second corps longitudinal 2' du raccord femelle 1'. Pour ce faire, la constante de raideur $k_M$ du premier ressort (9) s'exprime selon la formule [Math 1] :

$$k_M = k_F \times \frac{F_2 - (F_{DF} + 10)}{k_F.b - (F_2 - F_{DF})} \qquad \text{Formule 1}$$

où $F_2$ est la force exercée contre les deux têtes de clapets 8, 8' des clapets 7, 7' des raccords mâle 1 et femelle 1' lorsque le dispositif de couplage est dans sa position de passage de fluide.

Ainsi, la fuite de fluide dans l'évidement entre les deux raccords male 1 et femelle 1' lors de la séquence de couplage du dispositif de couplage est minimale, voire inexistante, et le risque de surpression est réduit au minimum.

Selon l'invention et en référence aux figures 2 à 5, la séquence de couplage du dispositif de couplage va maintenant être décrite.

En référence à la figure 2, le dispositif de couplage est dans sa position d'obturation : les têtes de clapets 8, 8' des clapets 7, 7' du premier raccord mâle 1 et du second raccord femelle 1' sont dans leur position fermée de prise étanche. Au cours de la première étape de la séquence, un effort de rapprochement progressif des deux raccords mâle et femelle 1, 1' entre eux est appliqué.

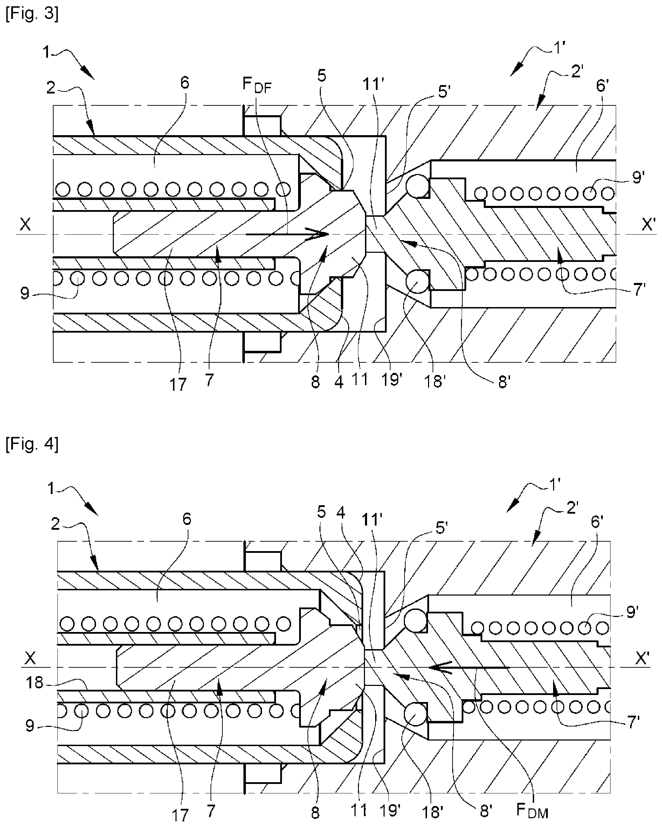

Dès que l'effort de rapprochement exercé sur l'extrémité 11' de la tête de clapet 8' du second clapet 7' du second raccord femelle 1' dépasse la valeur de la seconde force de déclenchement $F_{DF}$ et comme illustré sur la figure 3 qui représente la deuxième étape de la séquence, il s'opère un déplacement progressif de la tête de clapet 8' du second clapet 7' du second raccord femelle 1' vers sa position dégagée, la tête de clapet 8 du premier clapet 7 du premier raccord mâle 1 demeurant dans sa position fermée de prise étanche.

Dès que l'effort de rapprochement exercé sur l'extrémité 11 du premier clapet 7 du premier raccord mâle 1 dépasse la première force de déclenchement $F_{DM}$ et comme illustré sur la figure 4 qui représente la troisième étape de la séquence, il s'opère un déplacement progressif de la tête de clapet 8 du premier clapet 7 du premier raccord mâle 1 vers sa position dégagée. Bien entendu, la tête de clapet 8' du second clapet 7' du second raccord femelle 1' demeure dans sa position dégagée.

Enfin, la figure 5 représente la quatrième et dernière étape de la séquence, dans laquelle la tête de clapet 8 du premier clapet 7 du premier raccord mâle 1 est dans sa position dégagée. Le dispositif de couplage est alors dans sa position de passage de fluide.

De manière particulièrement avantageuse - comme représenté sur la figure 5 - le dispositif de couplage arrive dans sa position dégagée dès que l'extrémité de couplage 4 du premier corps longitudinal 2 du premier raccord 1 entre en appui de contact avec le fond 19' de l'évidemment de logement de l'extrémité de couplage 4' du raccord femelle 1'.

Le dispositif de couplage de l'invention permet ainsi de réaliser une séquence de couplage entre deux raccords respectivement mâle 1 et femelle 1' en minimisant, voire en supprimant les fuites de liquide cryogénique au niveau desdits raccords 1, 1' et en réduisant au minimum le risque de surpression entre les deux raccords mâle 1 et femelle 1'.

## Revendications

1. Dispositif de couplage de conduite de fluide comprenant un premier raccord (1) formant partie mâle et un second raccord (1') coopérant formant partie femelle, le premier raccord formant partie mâle (1) comportant :

   - un premier corps longitudinal (2) qui s'étend selon un axe principal (XX') depuis une première extrémité de jonction à une première conduite (3) jusqu'à une première extrémité de couplage (4) au second raccord (1') coopérant du dispositif de couplage, laquelle première extrémité de couplage (4) présente un premier orifice de passage du fluide (5) en communication fluidique avec un premier canal d'écoulement (6) ménagé dans le premier corps longitudinal (2) et qui s'étend depuis la première extrémité de couplage (4) jusqu'à l'extrémité de jonction à la première conduite (3),

   - un premier clapet (7) disposé dans le premier canal d'écoulement (6) du premier corps longitudinal (2), dont l'axe principal s'étend selon l'axe principal (XX') dudit corps longitudinal (2) du premier raccord (1), et qui comporte une première tête de clapet (8) située au niveau du premier orifice de passage (5) de la première extrémité de couplage (4) du premier corps longitudinal (2) et déplaçable longitudinalement dans le premier canal d'écoulement (6) entre une position dégagée dans laquelle ledit orifice de passage (5) est ouvert et une position fermée de prise étanche dans laquelle le premier orifice de passage (5) est obturé par appui de contact étanche entre la première tête de clapet (8) et un premier siège de tête de clapet (10) ménagé dans le premier corps longitudinal (2) et dans le prolongement interne du premier orifice de passage (5), une première extrémité libre d'obturation (11) du premier clapet (7) s'étendant dans le premier orifice de passage (5) en faisant saillie de la première extrémité de couplage (4), lequel premier clapet (7) comprend en outre des premiers moyens de rappel (9) de la première tête de clapet (8) vers sa position fermée de prise étanche,

   le second raccord (1') formant partie femelle comportant :

   - un second corps longitudinal (2') qui s'étend depuis une seconde extrémité de jonction à une seconde conduite (3') jusqu'à une seconde extrémité de couplage (4') qui entoure la première extrémité de couplage (4) du premier raccord (1), laquelle seconde extrémité de couplage (4') présente un second orifice de passage du fluide (5') en communication fluidique avec un second canal d'écoulement (6') ménagé dans le second corps longitudinal (2') et qui s'étend depuis la seconde extrémité de couplage (4') jusqu'à la seconde extrémité de jonction à la seconde conduite (3'),

   - un second clapet (7') disposé dans le second canal d'écoulement (6') du second corps longitudinal (2') et comportant une seconde tête de clapet (8') située au niveau du second orifice de passage (5') de la seconde extrémité de couplage (4') dudit corps longitudinal (2'), et qui est déplaçable longitudinalement dans le second canal d'écoulement (6') depuis une position dégagée dans laquelle le second orifice de passage (5') est ouvert, vers une position de prise étanche dans laquelle le second orifice de passage (5') est obturé par appui de contact étanche entre la seconde tête de clapet (8') et un second siège de tête de clapet (10') ménagé dans le second corps longitudinal (2') et dans le prolongement du second orifice de passage (5'), une seconde extrémité libre d'obturation (11') du second clapet (7') s'étendant dans le second orifice de passage (5') en faisant saillie de la seconde extrémité de couplage (4'), lequel second clapet (7') comprend en outre des seconds moyens de rappel (9') de la seconde tête de clapet (8') vers sa position fermée de prise étanche,

le dispositif de couplage étant actionnable entre une position d'obturation dans laquelle les têtes de clapet (8, 8') des clapets (7, 7') des premier et second raccords (1, 1') sont dans leur position de prise étanche et leurs extrémités libres d'obturation (11, 11') s'effleurent, et une position de passage de fluide depuis le premier raccord mâle (1) vers le second raccord femelle (1') dans laquelle les premiers moyens de rappel (9) de la première tête de clapet (8) du premier clapet (7) exercent une force sur l'extrémité libre (11') du second clapet (7') et maintiennent la seconde tête de clapet (8') dudit clapet (7') dans sa position dégagée, et les seconds moyens de rappel (9') de la seconde tête de clapet (8') du second clapet (7') exercent une force sur l'extrémité libre (11) du premier clapet (7) et maintiennent la première tête de clapet (8) dudit clapet (7) dans sa position dégagée, **caractérisé en ce que** la première tête de clapet (8) du premier clapet (7) du premier raccord mâle (1) est déplaçable depuis sa position de prise étanche vers sa position dégagée à l'encontre du premier moyen de rappel (9) lorsque les efforts exercés sur l'extrémité libre (11) dudit premier clapet (7) est supérieure à une première force de déclenchement $F_{DM}$ dépendante des premiers moyens de rappel (9), **en ce que** la seconde tête de clapet (8') du second clapet (7') du second raccord femelle (1') est déplaçable depuis sa position de prise étanche vers sa position dégagée à l'encontre du second moyen de rappel (9') lorsque les efforts exercés sur l'extrémité libre (11') dudit second clapet (7') est supérieure à une seconde force de déclenchement $F_{DF}$ dépendante des seconds moyens de rappel (9'), **en ce que** la première force de déclenchement $F_{DM}$ du déplacement de la première tête de clapet (8) du premier clapet (7) est supérieure à la seconde force de déclenchement $F_{DF}$ du déplacement de la seconde tête de clapet (8') du second clapet (7'), et **en ce que** la force exercée par les seconds moyens de rappel (9') sur la première tête de clapet (8) du premier clapet (7) est supérieure à la première force de déclenchement $F_{DM}$ lorsque le dispositif de couplage est dans sa position de passage de fluide, de sorte que la seconde tête de clapet (8') du second clapet (7') se déplace vers sa position dégagée avant la première tête de clapet (8) du premier clapet (7) lorsque le dispositif de couplage se déplace de sa position d'obturation vers sa position de passage de fluide depuis le premier raccord mâle (1) vers le second raccord femelle (1').

2. Dispositif de couplage selon la revendication précédente, **caractérisé en ce que** les extrémités de couplage (4, 4') des corps longitudinaux (2, 2') des premier et second raccords (1, 1') sont en appui de contact lorsque le dispositif de couplage est dans sa position de passage de fluide depuis le premier raccord mâle (1) vers le second raccord femelle (1').

3. Dispositif de couplage selon la revendication 1 ou 2, **caractérisé en ce que** les premiers moyens de rappel (9) sont formés d'un premier ressort présentant la première force de déclenchement $F_{DM}$ et une raideur $k_M$, et **en ce que** les seconds moyens de rappel (9') sont formé d'un second ressort présentant la seconde force de déclenchement $F_{DF}$ et une raideur $k_F$.

4. Dispositif de couplage selon la revendication précédente, **caractérisé en ce que** la constante de raideur $k_M$ du premier ressort (9) s'exprime selon la formule [Math 1] :

$$k_M = k_F \times \frac{F_2 - (F_{DF} + 10)}{k_F . b - (F_2 - F_{DF})}$$

avec $F_2$ la force exercée contre les deux têtes de clapets (8, 8') des clapets (7, 7') des raccords mâle (1) et femelle (1') lorsque le dispositif de couplage est dans sa position de passage de fluide, et b la distance entre les extrémités de couplage (4, 4') des corps longitudinaux (2, 2') des premier et second raccords (1, 1') lorsque le dispositif de couplage est dans sa position d'obturation.

5. Procédé de couplage d'un dispositif de couplage selon l'une quelconque des revendications précédentes, **caractérisé en ce qu'**il comprend les étapes successives suivantes :

- Le dispositif de couplage étant dans sa position d'obturation et les têtes de clapets (8, 8') des clapets (7, 7') du premier raccord mâle (1) et du second raccord femelle (1') dans leur position fermée de prise étanche, application d'un effort de rapprochement progressif des deux raccords mâle et femelle (1, 1') entre eux ;

- Déplacement progressif de la seconde tête de clapet (8') du second clapet (7') du second raccord femelle (1') vers sa position dégagée dès que l'effort de rapprochement exercé sur la seconde extrémité libre (11') dudit second clapet (7') dépasse la valeur de la seconde force de déclenchement $F_{DF}$, la première tête de clapet (8) du premier clapet (7) du premier raccord mâle (1) demeurant dans sa position fermée de prise étanche ;

- Déplacement progressif de la première tête de clapet (8) du premier clapet (7) vers sa position dégagée dès que l'effort de rapprochement exercé sur la première extrémité libre (11) dudit premier clapet (7) dépasse la première force de déclenchement $F_{DM}$, la seconde tête de clapet (8') du second clapet (7') étant dans sa position dégagée ;

- Arrivée de la première tête de clapet (8) du premier clapet (7) du premier raccord mâle (1) dans sa position dégagée et du dispositif de couplage dans sa position de passage de fluide.

6. Procédé selon la revendication précédente, **caractérisé en ce que** le dispositif de couplage arrive dans sa position dégagée dès que les extrémités de couplage (4, 4') des corps longitudinaux (2, 2') des premier et second raccords (1, 1') entre en appui de contact.

[Fig. 1]

[Fig. 2]

[Fig. 3]

[Fig. 4]

[Fig. 5]

Europäisches
Patentamt

European
Patent Office

Office européen
des brevets

# RAPPORT DE RECHERCHE EUROPEENNE

Numéro de la demande

EP 25 21 7590

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 3 581 836 A1 (STAUBLI SA ETS [FR]) 18 décembre 2019 (2019-12-18) * alinéa [0130]; figures * ----- | 1-6 | INV. F16L29/04 F16L37/34 |
| A | EP 3 171 067 A1 (PARKER HANNIFIN CORP [US]) 24 mai 2017 (2017-05-24) * alinéa [0052]; figures * ----- | 1-6 | |
| A | EP 4 166 833 A1 (PARKER HANNIFIN CORP [US]) 19 avril 2023 (2023-04-19) * alinéa [0053]; figures * ----- | 1-6 | |

**DOMAINES TECHNIQUES RECHERCHES (IPC)**

F16L

Le présent rapport a été établi pour toutes les revendications

| Lieu de la recherche | Date d'achèvement de la recherche | Examinateur |
|---|---|---|
| Munich | 23 mars 2026 | dall'Amico, Mauro |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...............................................................................................
& : membre de la même famille, document correspondant

EPO FORM 1503 03.82 (P04C02)

**EP 4 749 169 A1**

ANNEXE AU RAPPORT DE RECHERCHE EUROPEENNE
RELATIF A LA DEMANDE DE BREVET EUROPEEN NO.

EP 25 21 7590

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-03-2026

| Document brevet cité au rapport de recherche | Date de publication | Membre(s) de la famille de brevet(s) | Date de publication |
|---|---|---|---|
| EP 3581836 A1 | 18-12-2019 | CN 110608336 A | 24-12-2019 |
|  |  | EP 3581836 A1 | 18-12-2019 |
|  |  | ES 2867074 T3 | 20-10-2021 |
|  |  | FR 3082588 A1 | 20-12-2019 |
|  |  | US 2019383433 A1 | 19-12-2019 |
| EP 3171067 A1 | 24-05-2017 | EP 3171067 A1 | 24-05-2017 |
|  |  | EP 4067722 A1 | 05-10-2022 |
|  |  | US 2017138522 A1 | 18-05-2017 |
| EP 4166833 A1 | 19-04-2023 | EP 3833900 A1 | 16-06-2021 |
|  |  | EP 4166833 A1 | 19-04-2023 |
|  |  | ES 2991699 T3 | 04-12-2024 |
|  |  | US 2021310594 A1 | 07-10-2021 |
|  |  | WO 2020033370 A1 | 13-02-2020 |

EPO FORM P0460

Pour tout renseignement concernant cette annexe : voir Journal Officiel de l'Office européen des brevets, No.12/82